# EUROPEAN PATENT APPLICATION

(11) **EP 3 413 211 A1**
(43) Date of publication of application: **12.12.2018**
(21) Application number: 17744273.8
(22) Date of filing: 25.01.2017
(51) Int. Cl.: G06F 17/30, G06Q 30/06, G06Q 50/10

(54) **SIMILARITY LEARNING SYSTEM AND SIMILARITY LEARNING METHOD**

(30) Priority: 29.01.2016 JP 2016015698
(71) Applicant: Recruit Co., Ltd., Chuo-ku Tokyo 1040061 (JP)
(72) Inventor: SUHARA, Yoshihiko, Tokyo 100-6640 (JP); AWASHIMA, Hideki, Tokyo 100-6640 (JP); OIWA, Hidekazu, Tokyo 100-6640 (JP)
(74) Representative: EIP
(86) International application number: PCT/JP2017/002579
(87) International publication number: WO 2017/131043

(57) **Abstract**

Even if the number of documents for the number of words is insufficient, appropriate similarity degree learning is performed. An analysis method by a topic model is used to perform learning of a degree of similarity between recruitment information and resume information. By analyzing recruitment information registered with a recruitment card database DB 310 and resume information registered with a resume database DB 320 using a topic model, a characteristics extracting portion 330 collects words (keywords) extracted from documents constituting the recruitment information and the resume information for each topic; and a similarity degree learning portion 360 performs similarity degree learning for each topic.

## Description

### CROSS REFERENCE TO RELATED APPLICATION

The present application is based on Japanese Application No. 2016-15698 filed on January 29, 2016, the disclosed content of which is incorporated in the present application by reference.

### Technical Field

The present invention relates to a similarity degree learning system and the like, and more particularly to a similarity degree learning system and the like preferred for matching between information of a recruiting side and information of a job seeking side.

### Background Art

In a personnel placement agency (hereinafter generically referred to as an "agent"), it is common to select a job applicant candidate using recruitment information prepared by a recruiting company side and resume information prepared by a job seeker side (see, for example, Patent Literature 1).

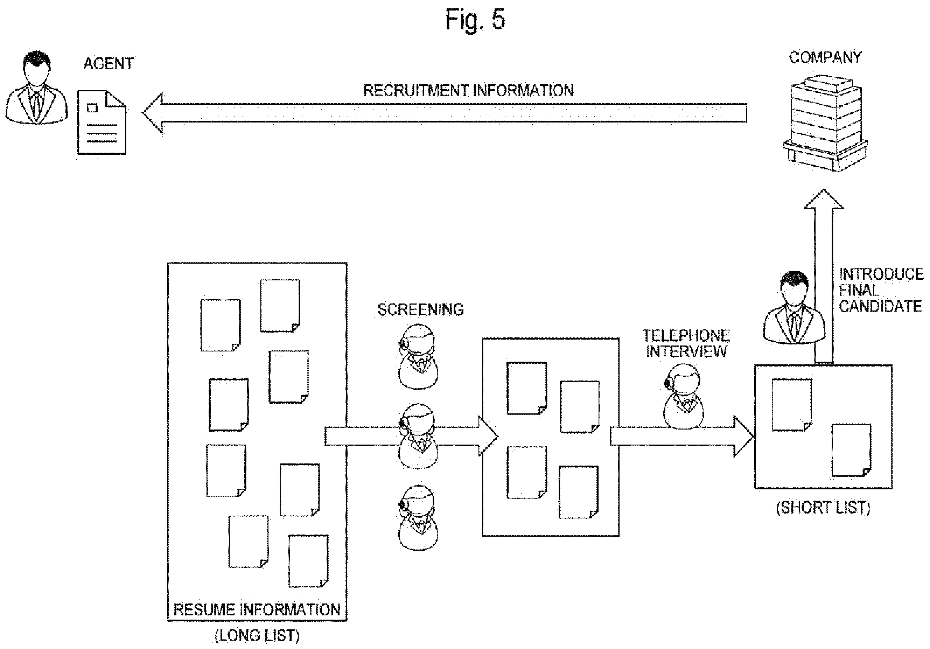

When description is made on Figure 5 as an example, an agent performs narrowing-down from a long list to a short list by performing screening, telephone interviews and the like based on recruitment information prepared by the company side and resume information prepared by the job seeker side first. Here, the long list refers to a candidate list before the agent performing screening for talented persons thought to satisfy needs of a recruiting company, and the short list refers to a candidate list obtained by the agent narrowing down the long list to several candidates by telephone interviews and the like.

When obtaining the short list in which candidates are narrowed down in this way, the agent determines a final candidate (a plurality of final candidates depending on cases) and introduces the final candidate (final candidates in some cases) to the company.

### Citation List

### Patent Literature

Patent Literature 1
Japanese Patent Laid-Open No. 2007-305006

### Summary of Invention

As one of measures for improving candidate selection accuracy, it is conceivable to replace a part of the selection process for narrowing down a long list to a short list, with AI (Artificial Intelligence). However, a problem has been pointed out that, only by merely utilizing AI to learn a degree of similarity between words (keywords) appearing in recruitment information of the company side and words appearing in resumes of job seekers, it is not possible to perform appropriate similarity degree learning because the number of documents included in recruitment information and resume information is insufficient for the number of words.

The present invention has been made in view of the above situation, and one of objects is to perform appropriate similarity degree learning even if the number of documents for the number of words is insufficient.

A similarity degree learning system according to one embodiment of the present invention is a similarity degree learning system used at the time of selecting, based on a piece of recruitment information of a company and pieces of resume information about job seekers, a job applicant candidate desired by the company, the similarity degree learning system comprising: characteristics extracting means for, by analyzing the piece of recruitment information and the pieces of resume information using a topic model, collecting words extracted from a document constituting each of the pieces of information, for each topic; a first database storing a piece of first topic-related information indicating characteristics about the document of the piece of recruitment information collected for each topic; a second database storing pieces of second topic-related information indicating characteristics about the documents of the pieces of resume information collected for each topic; similarity degree learning means for using the piece of first topic-related information and the pieces of second topic-related information to perform similarity degree learning for each topic, and generating pieces of similarity degree learning information indicating similarity degree learning results; and score calculating means for calculating scores of degrees of similarity between the piece of recruitment information and the pieces of resume information based on the piece of first topic-related information, the pieces of second topic-related information and the pieces of similarity degree learning information, and generating pieces of score information.

Here, in the above configuration, an aspect is preferred in which there is further provided candidate deciding means for identifying a plurality of pieces of resume information with high scores, based on the generated pieces of score information, and deciding job seekers corresponding to the identified pieces of resume information as final candidates. As an analysis method using a topic model, LDA may be used.

### Advantageous Effect of Invention

According to the above configuration, it is possible to, in similarity degree learning utilizing AI, perform appropriate similarity degree learning even if the number of documents for the number of words is insufficient.

### Brief Description of Drawings

[Figure 1] Figure 1 is a diagram showing a schematic configuration of a personnel placement system 1000 according to the present embodiment.
[Figure 2] Figure 2 is a block diagram showing a main configuration of an agent terminal 300.
[Figure 3A] Figure 3A is a diagram for illustrating similarity degree learning using keywords.
[Figure 3B] Figure 3B is a diagram for illustrating similarity degree learning using topics.
[Figure 4] Figure 4 is a flowchart showing a similarity degree learning process.
[Figure 5] Figure 5 is a diagram illustrating a job applicant candidate selection process.

### Description of Embodiment

An embodiment of the present invention will be described below in detail with reference to drawings. The same components will be given the same reference numerals, and duplicate explanation will be omitted.

### Present embodiment

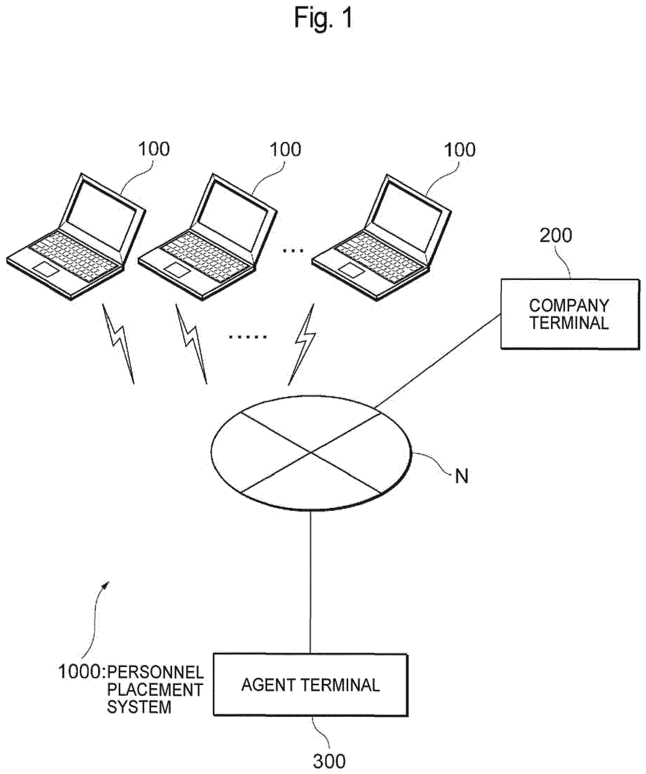

Figure 1 is a diagram showing a schematic configuration of a personnel placement system (a similarity degree learning system) 1000 according to the present embodiment. As shown in Figure 1, the personnel placement system 1000 is provided with job seeker terminals 100, a company terminal 200 and an agent terminal 300, and the terminals 100, 200 and 300 are mutually connected via a communication network N.

Each job seeker terminal 100 is configured, for example, with a tablet terminal or the like and can access the agent terminal 300 and the like via the communication network N. By operating the job seeker terminal 100, a job seeker can access the agent terminal 300 and perform registration of resume information (to be described in detail later) indicating the job seeker' business experience. The job seeker terminal 100 is not intended to be limited to a tablet terminal. All kinds of terminal apparatuses capable of giving and receiving data via the communication network N, such as a personal computer (PC), a notebook PC, a smartphone, a mobile phone and a mobile information terminal (PDA) can be used.

The company terminal 200 is configured, for example, with a personal computer and can access the agent terminal 300 and the like via the communication network N. In the case of viewing resume information by operating the company terminal 200, a responsible person of a company (a person in charge of recruitment in a personnel division, or the like) can register recruitment information about a desired talented person (to be described in detail later) with the agent terminal 300. As the company terminal 200, all kinds of terminal apparatuses provided with a communication function, such as a tablet terminal and a notebook PC, can be used.

### The agent terminal 300 performs

maintenance/management of a recruitment web site as well as narrowing down of job applicant candidates matching recruitment information of the company side (that is, narrowing down from a long list to a short list). The agent terminal 300 is configured, for example, with a computer with a high arithmetic processing capability and realizes various kinds of functions by a predetermined program operating on the computer.

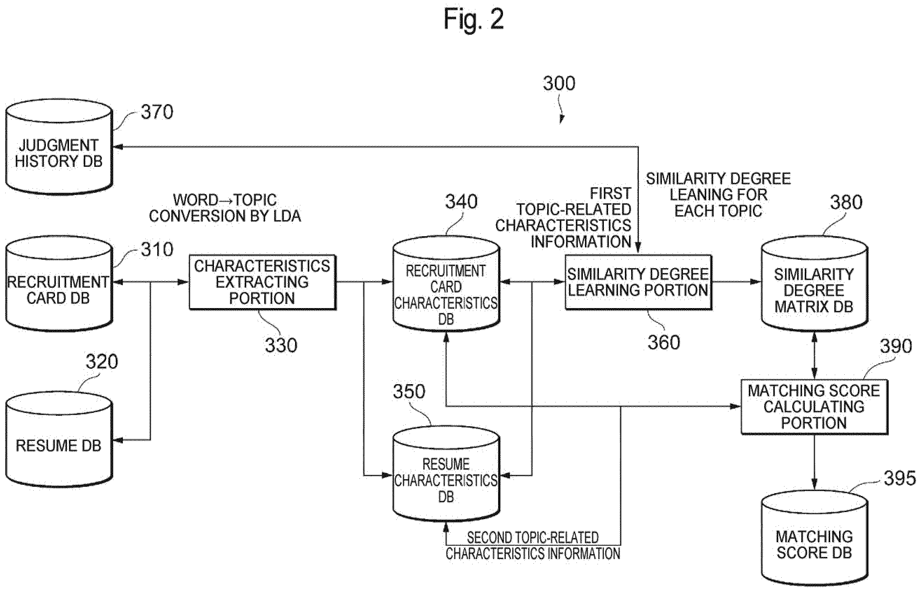

Figure 2 is a block diagram showing a functional configuration of the agent terminal 300. The agent terminal 300 is provided with a CPU and memories such as a ROM and a RAM, and realizes a function of each portion shown below and maintenance/management of each database by the CPU executing various kinds of programs stored in the memories.

A recruitment card database 310 is a database storing recruitment information of each company and stores recruitment information transmitted from each company terminal 200. In the recruitment information, application conditions information and the like are set in addition to job information consists of text information showing content of a job and image information. The job information consists of text information explaining content of a job, image information showing a workplace environment and the like. The applicant conditions information is, for example, information showing work location information, annual income information, age information, language skills information, educational background information and the like and is inputted by a responsible person of each recruiting company with free words.

A resume database 320 is a database storing resume information about each job seeker and stores resume information transmitted from each job seeker terminal 100. In the resume information, personal information about the job seeker is set. The personal information includes address information, name information, age information, educational background information, business experience information, qualification/competence information, desired work location information and the like about the job seeker. As the qualification/competence information, for example, names of qualifications the job seeker has, a language skills grade and the like are given.

By analyzing the recruitment information registered with the recruitment card database 310 and the resume information registered with the resume database 320 using a topic model, a characteristics extracting portion (characteristics extracting means) 330 performs a process of collecting words (keywords) extracted from documents constituting the recruitment information and the resume information for each topic, that is, a process of abstracting data. By assuming that each document is configured with a plurality of topics as described above, for example, a document configuration of "30% is 'management' (topic 1), 10% is 'marketing' (topic 2), ..." can be derived. Thereby, it becomes possible to grasp characteristics of each document, quantitatively grasp differences among documents and the like, and perform appropriate similarity degree learning. Though LDA (Latent Dirichlet Allocation) is used as the method for analysis by topic model in the present embodiment, other methods for analysis by topic model may be used.

A recruitment card characteristics database (a first database) 340 is a database storing characteristics information about each piece of recruitment information (information showing characteristics about a topic configuration of the document of each piece of recruitment information, and the like), and a resume characteristics database (a second database) 350 is a data base storing characteristics information about each piece of resume information (information showing characteristics about a topic configuration of the document of each piece of resume information, and the like). In description below, the characteristics information about the document of each piece of recruitment information will be called "first topic-related characteristics information", and the characteristics information about the document of each piece of resume information will be called "second topic-related characteristics information" for convenience. Each of the pieces of topic configuration information is outputted from a characteristics extracting portion 330.

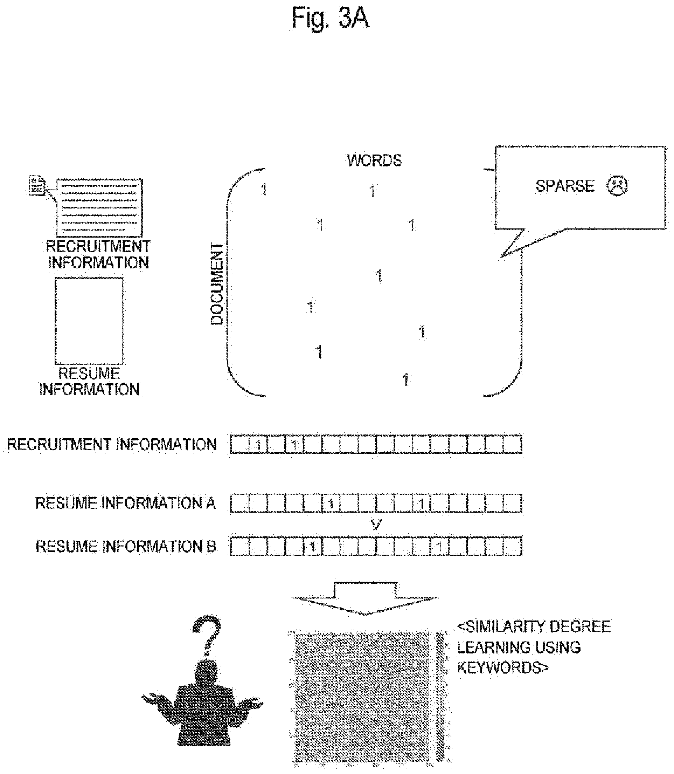

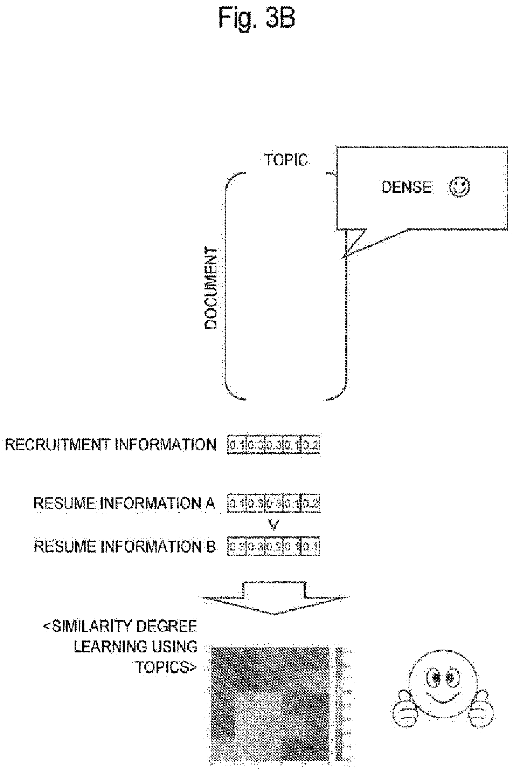

A similarity degree learning portion (similarity degree learning means) 360 uses the first topic-related characteristics information and the second topic-related characteristics information supplied from the recruitment card characteristics database 340 and the resume characteristics database 350 and, furthermore, judgment information to be described later to perform similarity degree learning for each topic. As described before, since words extracted from documents are not immediately used for similarity degree learning as conventionally done (see Figure 3A) but are collected for each topic so that similarity degree learning is performed based on topics (see Figure 3B) in the present embodiment, it becomes possible to improve accuracy of similarity degree learning. That is, if words are extracted as they are, from documents of recruitment information and resume information to perform similarity degree learning as done conventionally, "sparse matrix" (see Figure 3A) is assumed, and, therefore, there is a problem that learning accuracy decreases. In comparison, in the present embodiment, by collecting words of documents of recruitment information and resume information for each topic, "dense matrix" (see Figure 3B) is assumed. Thereby, it becomes possible to improve learning accuracy in comparison with the conventional case.

A judgment history database 370 is a database storing pieces of judgment information showing judgment results. The judgment information is information identifying a job seeker (or job seekers) finally employed by a company and is supplied to the agent terminal 300 from the company terminal 200 via the communication network N. By using the pieces of judgment information identifying actually employed job seekers together with both of the first and second pieces of topic-related characteristics information at the time of performing similarity degree learning, the similarity degree learning portion 360 can improve learning accuracy. Actually, all words included in recruitment information and resume information are not extracted or converted to topics to perform similarity degree learning. More specifically, the similarity degree learning portion 360 removes characteristics including words not contributing to topic conversion (classification) (for example, an English score of N1 points or higher, an income of M1 to M2 yen, and the like) from recruitment information and resume information in advance to perform similarity degree learning. However, the present invention is not intended to be limited thereto. Characteristic not contributing to topic conversion may be taken into account to perform similarity degree learning. For example, such a pair of resumes that judgments results are different though their characteristics not contributing topic conversion resemble may be used for similarity degree learning to improve learning accuracy. For example, if there are a job seeker employed and a job seeker not employed though English marks of the two job seekers are the same, a pair of resumes about the job seekers is used for similarity degree learning as teacher data. Thereby, it becomes possible to improve learning accuracy.

A similarity degree matrix database 380 is a database storing similarity degree learning information showing a learning result of a similarity degree outputted from the similarity degree learning portion 360 (that is, information obtained by quantifying a degree of similarity between targeted resume information and recruitment information).

A matching score calculating portion (score calculating means) 390 calculates a similarity degree score of targeted recruitment information and resume information using the first topic-related characteristics information, the second topic-related characteristics information and the similarity degree learning information supplied from the recruitment card characteristics database 340, the resume characteristics database 350 and the similarity degree matrix database 380, respectively, to generate score information.

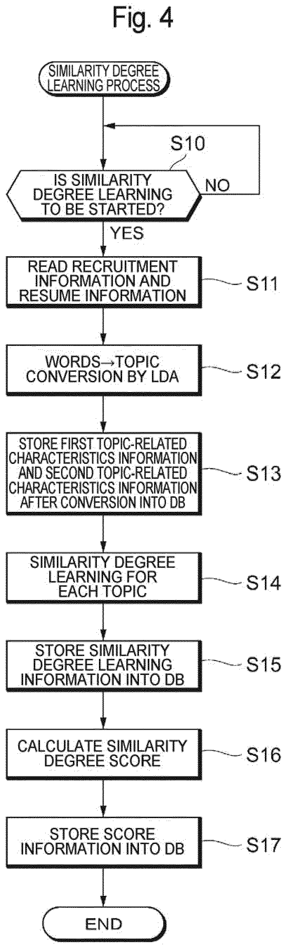

A matching score database 395 stores the score information obtained by quantifying a degree of similarity between resume information and recruitment information, which is outputted from the matching score calculating portion 390. Next, a similarity degree learning process executed by the agent terminal 300 will be described with reference to Figure 4.

Figure 4 is a flowchart showing the similarity degree learning process.
When the agent terminal 300 judges that similarity degree learning is to be started, in response to receiving new recruitment information from the company terminal 200 (step S10: YES), the characteristics extracting portion 330 of the agent terminal 300 reads the new recruitment information from the recruitment card database 310 and reads resume information about job seekers from the resume database 320 (step S20). Then, by performing analysis using LDA (a topic model) the characteristics extracting portion 330 collects words (keywords) extracted from documents constituting the recruitment information and the resume information for each topic, that is, performs topic conversion (step S12). If judging at step S10 that similarity degree learning is not to be started (step S10: NO), the agent terminal 300 repeatedly executes step S10.

When having performed the topic conversion, the characteristics extracting portion 330 stores first topic-related characteristics information and second topic-related characteristics information after the conversion into the recruitment card characteristics database 340 and the resume characteristics database 350, respectively (step S13).

After that, the similarity degree learning portion 360 reads out the first topic-related characteristics information and the second topic-related characteristics information from the recruitment card characteristics database 340 and the resume characteristics database 350 and refers to past judgment information stored in the judgment history database 370 to perform similarity degree learning for each topic (step S14; see Figure 3B).

Then, the similarity degree learning portion 360 stores similarity degree learning information showing a similarity degree learning result (that is, information obtained by quantifying a degree of similarity between the targeted resume information and recruitment information) into the similarity degree matrix database 380 (step S15).

The matching score calculating portion 390 acquires the first topic-related characteristics information, the second topic-related characteristics information and the similarity degree learning information supplied from the recruitment card characteristics database 340, the resume characteristics database 350 and the similarity degree matrix database 380, respectively, and calculates a similarity degree score of the targeted recruitment information and resume information using the pieces of information to generate score information (step S16). Then, the matching score calculating portion 390 stores the score information into the matching score database 395 and ends the process.

When the similarity degree learning process described above ends, the agent terminal (candidate determining means) 300 identifies, for example, X pieces of resume information (X≥2) with high scores and decides job seekers corresponding to the pieces of resume information as final candidates. Then, by transmitting the pieces of resume information about the final candidates to the company terminal 200 via the communication network N, it becomes possible to quickly introduce talented persons satisfying needs of a company. The company to which the final candidates are introduced decides a person to be employed by performing a final interview and the like. When the person to be employed is decided, a person in charge of recruitment operates the company terminal 200 to notify the agent terminal 300 of person-to-be-employed decision information (for example, the name and the like of the person to be employed) identifying the person to be employed. When receiving the person-to-be-employed decision information via the communication network N, the agent terminal 300 registers the person-to-be-employed decision information with the judgment history database 370. The person-to-be-employed decision information (for example, a candidate A3) can be registered in association with information identifying the final candidates (for example, candidates A1, A2, A3 and A4).

As described above, according to the present embodiment, by performing learning of a degree of similarity between recruitment information and resume information using an analysis method by a topic model, it becomes possible to improve learning accuracy in comparison with conventional similarity degree learning in which a topic model is not used. A program for realizing the similarity degree learning process shown in the above embodiment may be stored in a recording medium. By using the recording medium, the program can be installed into a computer which is the agent terminal 300. Here, the recording medium storing the above program may be a non-transitory recording medium. The non-transitory recording medium is not especially limited. For example, a recording medium such as a CD-ROM is possible.

The present invention described above is not limited to the embodiment described above but may be practiced in various other forms within a range not departing from the spirit of the present invention. Therefore, the above embodiment is a mere example in all points and should not be limitedly interpreted. For example, the process steps described above can be executed by arbitrarily changing order within a range not causing inconsistency in processing content or can be executed in parallel.

## Claims

1. A similarity degree learning system used at a time of selecting, based on a piece of recruitment information of a company and pieces of resume information about job seekers, a job applicant candidate desired by the company, the similarity degree learning system comprising:
characteristics extracting means for, by analyzing the piece of recruitment information and the pieces of resume information using a topic model, collecting words extracted from a document constituting each of the pieces of information, for each topic;
a first database storing a piece of first topic related information indicating characteristics about the document of the piece of recruitment information collected for each topic;
a second database storing pieces of second topic-related information indicating characteristics about the documents of the pieces of resume information collected for each topic;
similarity degree learning means for using the piece of first topic-related information and the pieces of second topic-related information to perform similarity degree learning for each topic, and generating pieces of similarity degree learning information indicating similarity degree learning results; and
score calculating means for calculating scores of degrees of similarity between the piece of recruitment information and the pieces of resume information based on the piece of first topic-related information, the pieces of second topic-related information and the pieces of similarity degree learning information, and generating pieces of score information.

2. The similarity degree learning system according to claim 1, further comprising candidate deciding means for identifying a plurality of pieces of resume information with high scores, based on the generated pieces of score information, and deciding job seekers corresponding to the identified pieces of resume information as final candidates.

3. The similarity degree learning system according to claim 1, wherein, if there are a job seeker decided as a final candidate and a job seeker not decided as a final candidate though the job seekers are the same or similar in characteristics included in the pieces of resume information and including words not contributing to the similarity degree learning, the similarity degree learning means uses a pair of pieces of resume information corresponding to the job seekers for the similarity degree learning as teacher data.

4. A similarity degree learning method used at a time of selecting, based on a piece of recruitment information of a company and pieces of resume information about job seekers, a job applicant candidate desired by the company, the similarity degree learning method comprising the steps of:
by analyzing the piece of recruitment information and the pieces of resume information using a topic model, collecting words extracted from a document constituting each of the pieces of information, for each topic;
storing a piece of first topic-related information indicating characteristics about the document of the piece of recruitment information collected for each topic into a first database;
storing pieces of second topic-related information indicating characteristics about the documents of the pieces of resume information collected for each topic into a second database;
using the piece of first topic-related information and the pieces of second topic-related information to perform similarity degree learning for each topic, and generating pieces of similarity degree learning information indicating similarity degree learning results; and
calculating scores of degrees of similarity between the piece of recruitment information and the pieces of resume information based on the piece of first topic-related information, the pieces of second topic-related information and the pieces of similarity degree learning information, and generating pieces of score information.
